# EUROPEAN PATENT APPLICATION

(11) **EP 3 876 323 A1**
(43) Date of publication of application: **08.09.2021**
(21) Application number: 19877700.5
(22) Date of filing: 15.04.2019
(51) Int. Cl.: H01M 8/1016, H01M 10/0562, H01M 10/0525

(54) **MODIFIED SOLID ELECTROLYTE MEMBRANE AND PREPARATION METHOD THEREFOR, AND LITHIUM BATTERY**

(30) Priority: 30.10.2018 CN 201811275832
(71) Applicant: Tianmulake Excellent Anode Materials Co., Ltd., Liyang, Jiangsu 213200 (CN)
(72) Inventor: YAN, Zhao, Jiangsu 213200 (CN); LUO, Fei, Jiangsu 213200 (CN); TAO, Ling, Jiangsu 213200 (CN); LI, Hong, Jiangsu 213200 (CN)
(74) Representative: Glück Kritzenberger Patentanwälte PartGmbB
(86) International application number: PCT/CN2019/082611
(87) International publication number: WO 2020/087873

(57) **Abstract**

Disclosed in the present invention are a modified solid electrolyte membrane, and a preparation method therefor, and a lithium battery. The modified solid electrolyte membrane comprises a base membrane and a solid electrolyte layer. The solid electrolyte layer is formed by a coating slurry, the basic membrane being coated by the coating slurry, or the basic membrane being coated by the coating slurry and the coating slurry even permeating into the basic membrane; a thickness ratio of a coating layer on the base membrane to the base membrane is 10:1-1:10; the thickness of the coating layer ranges from µm to 10µm; the density ranges from 50% to 100%. The solid electrolyte layer is formed by a NASICON type solid electrolyte material, has a particle size smaller than 1µm, and is specifically represented as Li₁₊ₓAₓB₂₋ₓ(PO₄)₃, wherein x ranges from 0 to 0.6, A is one or more of Al, Y, Ga, Cr, In, Fe, Se and La, and B is one or more of Ti, Ge, Ta, Zr, Sn, Fe, V and element hafnium Hf; after the solid electrolyte membrane is cyclically formed, an X-ray photoelectron spectroscopy has a peak between 685eV to 690eV

## Description

The application claims priority on Chinese Patent Application No. 201811275832.9, entitled "Modified Solid Electrolyte Membrane, Preparation Method Therefor, and Lithium Battery", and filed with the China National Intellectual Property Administration on October 30, 2018.

### BACKGROUND OF THE INVENTION

### 1. Technical Field

The present invention relates to the technical field of lithium battery materials, in particular to a modified solid electrolyte membrane, a preparation method therefor, and a lithium battery.

### 2. Description of Related Art

Lithium ion batteries, as novel secondary rechargeable batteries, have a high working voltage, a high capacity and a long cycle life and are free of pollution, thus having been widely applied to notebook computers, mobile phones and electric tools. In recent years, the continuous development of new energy leads to a gradual increase of the demand for secondary batteries, and the improvement on the overall safety and electrochemical performance of the batteries has become the key point of the development of the secondary batteries at present. Membranes, as an important component of the secondary batteries, have an influence on the interface structure and internal impedance and play a crucial role in the thermal stability, cycle performance, rate performance and safety performance of the batteries, so the membranes of lithium batteries should have good chemical stability, electrochemical stability and some tensile strength and penetration resistance. Most existing commercial membranes are coated with nano-alumina, so that the heat resistance and thermal stability of the membranes are effectively improved, and the service life of the membranes is prolonged. However, the oxide smeared on the membranes reduces the energy density of the batteries and increases the internal resistance of the batteries.

In view of this, a modified solid electrolyte membrane is needed to overcome the technical defects of the prior art.

### BRIEF SUMMARY OF THE INVENTION

The present invention provides a modified solid electrolyte membrane, a preparation method therefor, and a lithium battery. The modified solid electrolyte membrane of the present invention has the characteristics of good absorbability, uniform thickness, high-temperature resistance and high ionic conductivity. The preparation method of the modified solid electrolyte membrane is simple and suitable for mass production.
In a first aspect, one embodiment of the invention provides a modified solid electrolyte membrane, which comprises: a base membrane and a solid electrolyte layer, wherein the solid electrolyte layer is prepared from a coating slurry smeared on the base membrane or smeared on and infiltrated into the base membrane; and the ratio of the thickness of a coating on the base membrane to the thickness of the base membrane is 10:1-1:10, the thickness of the coating is 1µm-10µm, and the compactness of the coating is 50%-100%;
The solid electrolyte layer is prepared from a NASICON solid electrolyte material with a particle size less than 1µm, and specifically, the NASICON solid electrolyte material is Li₁₊ₓAₓB₂₋ₓ(PO₄)₃, wherein x is between 0 and 0.6, A is one or more of Al, Y, Ga, Cr, In, Fe, Se and La, and B is one or more of Ti, Ge, Ta, Zr, Sn, Fe, V and Hf;
After the solid electrolyte membrane is cyclically formed, an X-ray photoelectron spectroscopy of the solid electrolyte membrane has a peak between 685eV and 690eV

Preferably, the base membrane is any one of a polyolefin microporous membrane, a woven membrane, a non-woven membrane, a composite membrane, a roller-compacted membrane, an alumina ceramic membrane, a ceramic fiber membrane, a poly vinylidene fluoride-hexafluoro propylene (PVDF-HFP) composite porous polymer membrane, a PVDF and PVDF copolymer porous membrane, a composite nanofiber membrane, a Polyethylene oxide (PEO)-lithium salt composite lithium-ion conductive membrane and polymethyl methacrylate (PMMA) composite membrane.

Preferably, the ratio of the thickness of the coating to the thickness of the base membrane is 10:1-1:5, and the compactness of the coating is from 60% to-99%.

Preferably, the ratio of the thickness of the coating to the thickness of the base membrane is 5:1-1:5, and the compactness of the coating is from 65% to 98%.

Preferably, the solid electrolyte material has a particle size less than 500nm and is spherical or irregular polygonal, and x is between 0.2 and 0.6.

Further preferably, the solid electrolyte material has a particle size less than 200nm, and x is between 0.3 and 0.5.

In a second aspect, one embodiment of the present invention provides a preparation method of a modified solid electrolyte membrane, comprising:
Adding a dispersant, a binder and a solvent into a pre-mixing tank in a desired proportion to be completely dissolved to obtain a first mixture;
Stepwise adding solid electrolyte powder into the first mixture in a desired proportion to be stirred at a speed of 10-50rpm and dispersed at a speed of 1000-5000rpm, and after the solid electrolyte powder is stirred evenly, carrying out screening to obtain a coating slurry, wherein the solid electrolyte powder is prepared from a NASICON solid electrolyte material with a particle size less than 1µm, and specifically, the NASICON solid electrolyte material is Li₁₊ₓAₓB₂₋ₓ(PO₄)₃, wherein x is between 0 and 0.6, A is one or more of Al, Y, Ga, Cr, In, Fe, Se and La, and B is one or more of Ti, Ge, Ta, Zr, Sn, Fe, V and Hf; and

Smearing the coating slurry on one side or both sides of a base membrane at a speed of 1m/min-100m/min, and drying the coating slurry at 20°C-100°C to obtain a modified solid electrolyte membrane, wherein the base membrane is any one of a polyolefin microporous membrane, a woven membrane, a non-woven membrane, a composite membrane, a roller-compacted membrane, an alumina ceramic membrane, a ceramic fiber membrane, a PVDF-HFP composite porous polymer membrane, a PVDF and PVDF copolymer porous membrane, a composite nanofiber membrane, a PEO-lithium salt composite lithium-ion conductive membrane and PMMA composite membrane.
Preferably, the solvent is at least one of water, N-methyl pyrrolidone, N, N-dimethyl formamide, acetone and acetonitrile;
When the solvent is water, the binder is one or a mixture of more than one of (Styrene butadiene rubber) SBR latex, styrene-acrylic latex, polyvinyl alcohol, polyacrylamide, polymethyl methacrylate-butyl acrylate, hydroxyethyl cellulose, methyl hydroxyethyl cellulose, sodium carboxymethylcellulose and polyacrylamide, and the dispersant is one or more of sodium polyacrylate, dodecylbenzene sulfonic acid, lauryl sodium sulfate, sodium hexametaphosphate, polyacrylic acid, cetyl trimethyl ammonium bromide, polyethylene glycol, potassium polyacrylate, ethoxylated octyl phenol and fluorine sulfonate;
When the solvent is at least one of N-methyl pyrrolidone, N, N-dimethyl formamide, acetone and acetonitrile, the binder is one or more of polyvinylidene fluoride, polyvinylidene fluoride-hexafluoropropylene, polytetrafluoroethylene, polymethyl methacrylate and polyacrylonitrile, and the dispersant is one or more of glycerol monostearate, glycerol tristearate, oleamide and N, N-ethylene bis-stearamide.

In a third aspect, one embodiment of the present invention further provides a lithium battery comprising the modified solid electrolyte membrane mentioned in the first aspect.

The modified solid electrolyte membrane of the present invention has the characteristics of good absorbability, uniform thickness, high-temperature resistance and high ionic conductivity. The preparation method of the modified solid electrolyte membrane is simple and suitable for mass production.

### BRIEF DESCRIPTION OF THE SEVERAL VIEWS OF THE DRAWINGS

The technical solutions of the embodiments of the present invention will be described in further detail below with reference to accompanying drawings and embodiments.
FIG. 1 is a structural diagram of a modified solid electrolyte membrane provided by one embodiment of the present invention;
FIG. 2 is a flow diagram of a preparation method of a modified solid electrolyte membrane provided by one embodiment of the present invention;
FIG. 3 is an SEM image of a modified solid electrolyte membrane provided by Embodiment 1 of the present invention;
FIG. 4 is an impedance comparison diagram of the modified solid electrolyte membrane provided by Embodiment 1 of the present invention and an alumina membrane prepared in a comparative example;
FIG. 5 is a comparison diagram of the X-ray photoelectron spectroscopy of electrolyte membranes prepared in Embodiment 1, Embodiment 2 and Embodiment 3 of the present invention and in the comparative example.

### DETAILED DESCRIPTION OF THE INVENTION

The present invention will be explained in further detail below in conjunction with embodiments, but the following description is not intended to limit the protection scope of the present invention.

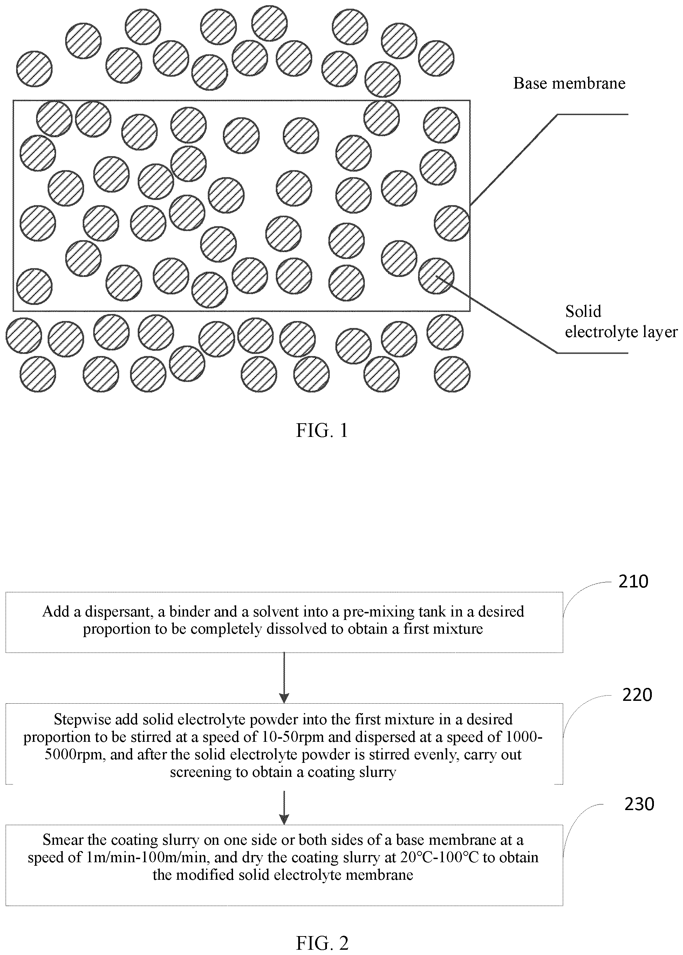

One embodiment of the present invention provides a modified solid electrolyte membrane, comprising a base membrane and a solid electrolyte layer, wherein the solid electrolyte layer is prepared from a coating slurry smeared on the base membrane or a coating slurry smeared on and infiltrated into the base membrane. In the structure illustrated by FIG. 1, the modified solid electrolyte membrane comprises a base membrane and a solid electrolyte layer, wherein the solid electrolyte layer is prepared from a coating slurry smeared on at least one side of the base membrane or smeared on and infiltrated into the base membrane. Wherein, in the solid electrolyte layer, the ratio of the thickness of a coating formed by the coating slurry smeared on the base membrane to the thickness of the base membrane is 10:1-1:5, and the compactness of the coating is from 60% to 90%. Preferably, the ratio of the thickness of the coating to the thickness of the base membrane is from 5:1 to1:5, and the compactness of the coating is from 65% to 98%.

Wherein, the base membrane is any one of a polyolefin microporous membrane, a woven membrane, a non-woven membrane, a composite membrane, a roller-compacted membrane, an alumina ceramic membrane, a ceramic fiber membrane, a PVDF-HFP composite porous polymer membrane, a PVDF and PVDF copolymer porous membrane, a composite nanofiber membrane, a PEO-lithium salt composite lithium-ion conductive membrane and PMMA composite membrane.

The solid electrolyte layer is prepared from a NASICON solid electrolyte material with a particle size less than 1µm. Specifically, the NASICON solid electrolyte material is Li₁₊ₓAₓB₂₋ₓ(PO₄)₃, wherein x is between 0 and 0.6, A is one or more of Al, Y, Ga, Cr, In, Fe, Se and La, and B is one or more of Ti, Ge, Ta, Zr, Sn, Fe, V and Hf. In a preferred solution, the solid electrolyte material has a particle size less than 500nm and is spherical or irregular polygonal, and x in Li₁₊ₓAₓB₂₋ₓ(PO₄)₃ is between 0.2 and 0.6. In a more preferred solution, the solid electrolyte material has a particle size less than 200nm, and x in Li₁₊ₓAₓB₂₋ₓ(PO₄)₃ is between 0.3 and 0.5.

A preparation method of a modified solid electrolyte membrane provided by one embodiment of the present invention will be introduced below.

This embodiment provides a preparation method of a modified solid electrolyte membrane, which, as shown in FIG. 2, comprises the following steps:
Step 210: a dispersant, a binder and a solvent are added into a pre-mixing tank in a desired proportion to be completely dissolved to obtain a first mixture;
Wherein, the solvent is at least one of water, N-methyl pyrrolidone, N, N-dimethyl formamide, acetone and acetonitrile;
When the solvent is water, the binder is one or a mixture of more than one of SBR latex, styrene-acrylic latex, polyvinyl alcohol, polyacrylamide, polymethyl methacrylate-butyl acrylate, hydroxyethyl cellulose, methyl hydroxyethyl cellulose, sodium carboxymethylcellulose and polyacrylamide, and the dispersant is one or more of sodium polyacrylate, dodecylbenzene sulfonic acid, lauryl sodium sulfate, sodium hexametaphosphate, polyacrylic acid, cetyl trimethyl ammonium bromide, polyethylene glycol, potassium polyacrylate, ethoxylated octyl phenol and fluorine sulfonate;
When the solvent is at least one of N-methyl pyrrolidone, N, N-dimethyl formamide, acetone and acetonitrile, the binder is one or more of polyvinylidene fluoride, polyvinylidene fluoride-hexafluoropropylene, polytetrafluoroethylene, polymethyl methacrylate and polyacrylonitrile, and the dispersant is one or more of glycerol monostearate, glycerol tristearate, oleamide and N, N-ethylene bis-stearamide.
Step 220: solid electrolyte powder is stepwise added into the first mixture in a desired proportion to be stirred at a speed of 10-50rpm and dispersed at a speed of 1000-5000rpm, and after the solid electrolyte powder is stirred evenly, screening is carried out to obtain a coating slurry;
Wherein, the solid electrolyte powder is prepared from a NASICON solid electrolyte material which has a particle size less than 1µm and is spherical or irregular polygonal; the solid electrolyte powder is preferably Li₁₊ₓAₓB₂₋ₓ(PO₄)₃, wherein x is between 0 and 0.6, A is one or more of Al, Y, Ga, Cr, In, Fe, Se and La, and B is one or more of Ti, Ge, Ta, Zr, Sn, Fe, V and Hf;

In a preferred solution, the solid electrolyte material has a particle size less than 500nm and is spherical or irregular polygonal, and x in Li₁₊ₓAₓB₂₋ₓ(PO₄)₃ is between 0.2 and 0.6. In a more preferred solution, the solid electrolyte material has a particle size less than 200nm, and x in Li₁₊ₓAₓB₂₋ₓ(PO₄)₃ is between 0.3 and 0.5.
Step 230: the coating slurry is smeared on one side or both sides of a base membrane at a speed of 1m/minute-100m/minute, and the coating slurry is dried at 20 °C-100°C to obtain a modified solid electrolyte membrane;

Wherein, the base membrane is any one of a polyolefin microporous membrane, a woven membrane, a non-woven membrane, a composite membrane, a roller-compacted membrane, an alumina ceramic membrane, a ceramic fiber membrane, a PVDF-HFP composite porous polymer membrane, a PVDF and PVDF copolymer porous membrane, a composite nanofiber membrane, a PEO-lithium salt composite lithium-ion conductive membrane and PMMA composite membrane.

The modified solid electrolyte membrane prepared through this method has the characteristics of good absorbability, uniform thickness, high-temperature resistance and high ionic conductivity. The preparation method of the modified solid electrolyte membrane is simple and suitable for mass production.

The technical solutions of the present invention will be explained in further detail below in conjunction with specific embodiments.

### Embodiment 1

This embodiment provides a modified solid electrolyte membrane, which comprises a base membrane and a solid electrolyte layer prepared from a coating slurry smeared on one side of the base membrane, wherein the base membrane is a polypropylene porous membrane and has a thickness of 10µm, the coating slurry is smeared on one side of the base membrane and has a thickness of 3µm, and the coating slurry for forming the solid electrolyte layer comprises, by mass, 20% of a composition and 80% of deionized water, wherein the composition is prepared from, by mass, 97% of nano solid electrolyte lithium titanium phosphate Li_{1.5}Ak_{0.5}Ti_{1.5}(PO₄)₃ powder with a particle size D50 of 200nm, binders: 1% of sodium carboxymethylcellulose and 1% of SBR latex, and dispersants: 1% of sodium polyacrylate and 1% of ethoxylated octyl phenol.

The modified solid electrolyte membrane in this embodiment is prepared through a method comprising the following steps:
(1) The binders, namely the sodium carboxymethylcellulose and the SBR latex, and the dispersants, namely the sodium polyacrylate and the ethoxylated octyl phenol, were added into a pre-mixing tank in the above proportion to be completely dissolved to obtain a mixture I;
(2) The nano solid electrolyte lithium titanium phosphate Li_{1.5}Al_{0.5}Ti_{1.5}(PO₄)₃ powder was stepwise added into the mixture I to be stirred at a speed of 50rpm and dispersed at a speed of 3000rpm to obtain a mixture II;
(3) The mixture II was screened with a 400-mesh sieve to obtain the coating slurry; and
(4) The coating slurry was smeared on one side of the base membrane at a speed of 5m/min and was dried at 50°C, so that the modified solid electrolyte membrane was obtained.

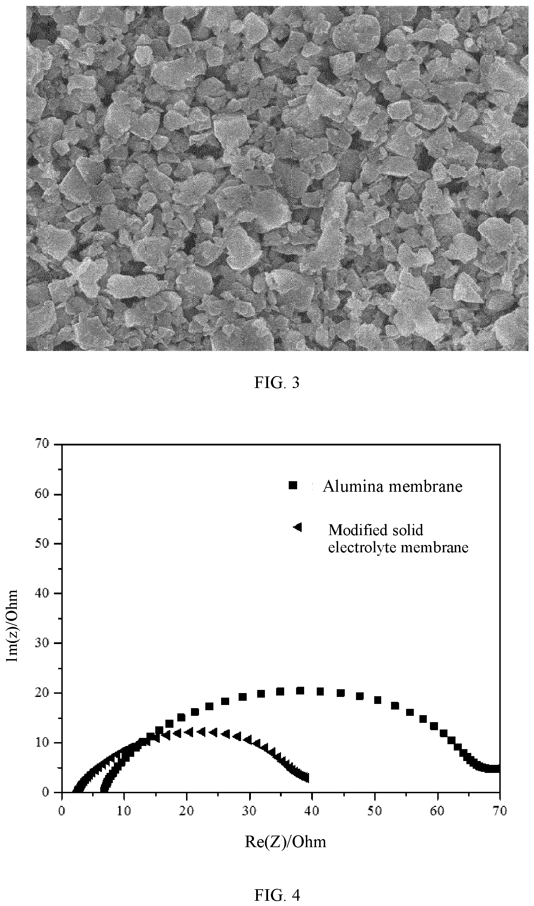

An SEM image of the modified solid electrolyte membrane provided by Embodiment 1 of the present invention is shown in FIG. 3. As can be seen from FIG. 3, the solid electrolyte powder is distributed uniformly.

### Embodiment 2

This embodiment provides a modified solid electrolyte membrane which comprises a base membrane and a solid electrolyte layer prepared from a coating slurry smeared on one side of the base membrane. The base membrane is a polypropylene porous membrane and has a thickness of 12µm, the coating slurry is smeared on one side of the base membrane and has a thickness of 4µm, and the coating slurry for forming the solid electrolyte layer comprises, by mass, 20% of a composition and 80% of N-methyl pyrrolidon, wherein the composition is prepared from, by mass, 96% of nano solid electrolyte lithium titanium phosphate Li_{1.5}Ak_{0.5}Ti_{1.5}(PO₄)₃ powder with a particle size D50 of 200nm, a binder: 2% of polyvinylidene fluoride, and a dispersant: 2% of stearin.

The preparation method of the modified solid electrolyte membrane is the same as the preparation method in Embodiment 1.

### Embodiment 3

This embodiment provides a modified solid electrolyte membrane which comprises a base membrane and a solid electrolyte layer prepared from a coating slurry smeared on one side of the base membrane, wherein the base membrane is a polypropylene porous membrane and has a thickness of 7µm, the coating slurry is smeared on one side of the base membrane and has a thickness of 2µm, and the coating slurry for forming the solid electrolyte layer comprises, by mass, 20% of a composition and 80% of deionized water. Wherein, the composition is prepared from, by mass, 97% of nano solid electrolyte lithium titanium phosphate Li_{1.5}Ak_{0.5}Ti_{1.5}(PO₄)₃ powder with a particle size D50 of 200nm, binders: 1% of sodium carboxymethyl cellulose and 1% of SBR latex, and dispersants: 0.3% of polyethylene glycol and 0.7% of dodecylbenzene sulfonic acid.

The preparation method of the modified solid electrolyte membrane is the same as the preparation method in Embodiment 1.

### Comparative Example 1

In Comparative Example 1, a polypropylene porous membrane with one side coated with alumina was adopted, the thickness of the base membrane was 10µm, and the thickness of an alumina coating was 3µm.

This example adopted the same coating method as Embodiment 1. The ionic conductivity of the membrane was tested under the same assembly condition. Test results are shown in FIG. 4.

As can be seen from FIG. 4, the internal resistance of the modified solid electrolyte membrane is obviously lower than that of the alumina membrane, so the modified solid electrolyte membrane has a higher ionic conductivity.

In addition, the modified solid electrolyte membrane of the present invention has good stability. Table 1 shows the comparison in thermal stability of the alumina membrane prepared in the comparative example, the base membrane-polypropylene membrane (PP membrane) prepared in Embodiment 1, and the modified solid electrolyte membrane provided by Embodiment 1.

**Table 1**

| | Alumina membrane | Polypropylene porous membrane | Modified solid electrolyte membrane |
|---|---|---|---|
| 110°C | Not deformed or shrunk | Deformed and shrunk | Not deformed or shrunk |
| 120°C | Deformed and shrunk | Deformed and shrunk | Not deformed or shrunk |
| 130°C | Deformed and shrunk | Deformed and shrunk | Not deformed or shrunk |

As can be seen, the thermal stability of the modified solid electrolyte membrane of the present invention is better than that of the alumina membrane prepared in the comparative example and the unmodified polypropylene porous membrane.

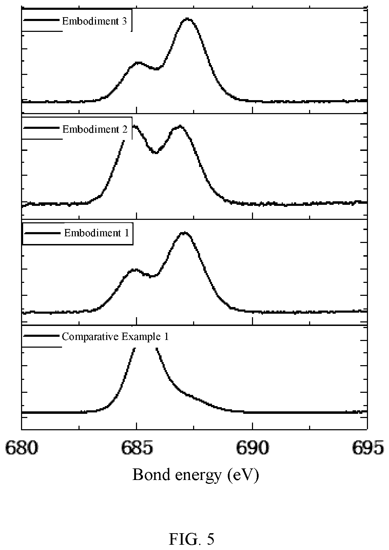

FIG. 5 is a comparison diagram of the X-ray photoelectron spectroscopy of the electrolyte membranes prepared in Embodiment 1, Embodiment 2 and Embodiment 3 of the invention and in the comparative example which are tested after the electrolyte membranes are assembled in batteries to be cyclically formed and then disassembled from the batteries. Compared with Comparative Example 1, Embodiment 1, Embodiment 2 and Embodiment 3 have an extra peak between 685eV and 690eV, and the ionic conductivity of corresponding substances can be increased.

The purposes, technical solutions and beneficial effects of the present invention have been explained in further detail with reference to the above specific embodiments. It should be understood that the above embodiments are merely specific ones of the present invention, and are not intended to limit the protection scope of the present invention. Any modifications, equivalent substitutions and improvements made based on the spirit and principle of the present invention should also fall within the protection scope of the present invention.

## Claims

1. A modified solid electrolyte membrane, comprising a base membrane and a solid electrolyte layer, wherein the solid electrolyte layer is prepared from a coating slurry smeared on the base membrane or smeared on and infiltrated into the base membrane; and the ratio of a thickness of a coating on the base membrane to a thickness of the base membrane is 10:1-1:10, the thickness of the coating is from µm to 10µm, and a compactness of the coating is from 50% to 100%;
the solid electrolyte layer is prepared from a NASICON solid electrolyte material with a particle size less than 1µm, and specifically, the NASICON solid electrolyte material is Li₁₊ₓAₓB₂₋ₓ(PO₄)₃, wherein x is between 0 and 0.6, A is one or more of Al, Y, Ga, Cr, In, Fe, Se and La, and B is one or more of Ti, Ge, Ta, Zr, Sn, Fe, V and Hf;
after the solid electrolyte membrane is cyclically formed, an X-ray photoelectron spectroscopy of the solid electrolyte membrane has a peak between 685eV and 690eV

2. The modified solid electrolyte membrane according to Claim 1, wherein the base membrane is any one of a polyolefin microporous membrane, a woven membrane, a non-woven membrane, a composite membrane, a roller-compacted membrane, an alumina ceramic membrane, a ceramic fiber membrane, a PVDF-HFP composite porous polymer membrane, a PVDF and PVDF copolymer porous membrane, a composite nanofiber membrane, a PEO-lithium salt composite lithium-ion conductive membrane and PMMA composite membrane.

3. The modified solid electrolyte membrane according to Claim 1, wherein the ratio of the thickness of the coating to the thickness of the base membrane is from 10:1 to1:5, and the compactness of the coating is from 60% to 99%.

4. The modified solid electrolyte membrane according to Claim 1, wherein the ratio of the thickness of the coating to the thickness of the base membrane is from 5:1 to1:5, and the compactness of the coating is from 65% to 98%.

5. The modified solid electrolyte membrane according to Claim 1, wherein the solid electrolyte material has a particle size less than 500nm and is spherical or irregular polygonal, and x is between 0.2 and 0.6.

6. The modified solid electrolyte membrane according to Claim 5, wherein the solid electrolyte material has a particle size less than 200nm, and x is between 0.3 and 0.5.

7. A preparation method of the modified solid electrolyte membrane according to any one of Claims 1-6, comprising:
adding a dispersant, a binder and a solvent into a pre-mixing tank in a desired proportion to be completely dissolved to obtain a first mixture;
stepwise adding solid electrolyte powder into the first mixture in a desired proportion to be stirred at a speed of 10-50rpm and dispersed at a speed of 1000-5000rpm, and after the solid electrolyte powder is stirred evenly, carrying out screening to obtain a coating slurry, wherein the solid electrolyte powder is prepared from a NASICON solid electrolyte material, has a particle size less than 1µm, and specifically, the NASICON solid electrolyte material is Li₁₊ₓAₓB₂₋ₓ(PO₄)₃, wherein x is between 0 and 0.6, A is one or more of Al, Y, Ga, Cr, In, Fe, Se and La, and B is one or more of Ti, Ge, Ta, Zr, Sn, Fe, V and Hf; and
smearing the coating slurry on one side or both sides of a base membrane at a speed of 1m/min-100m/min, and drying the coating slurry at 20°C-100°C to obtain the modified solid electrolyte membrane, wherein the base membrane is any one of a polyolefin microporous membrane, a woven membrane, a non-woven membrane, a composite membrane, a roller-compacted membrane, an alumina ceramic membrane, a ceramic fiber membrane, a PVDF-HFP composite porous polymer membrane, a PVDF and PVDF copolymer porous membrane, a composite nanofiber membrane, a PEO-lithium salt composite lithium-ion conductive membrane and PMMA composite membrane.

8. The preparation method of the modified solid electrolyte membrane according to Claim 7, wherein the solvent is at least one of water, N-methyl pyrrolidone, N, N-dimethyl formamide, acetone and acetonitrile;
when the solvent is water, the binder is one or a mixture of more than one of SBR latex, styrene-acrylic latex, polyvinyl alcohol, polyacrylamide, polymethyl methacrylate-butyl acrylate, hydroxyethyl cellulose, methyl hydroxyethyl cellulose, sodium carboxymethylcellulose and polyacrylamide, and the dispersant is one or more of sodium polyacrylate, dodecylbenzene sulfonic acid, lauryl sodium sulfate, sodium hexametaphosphate, polyacrylic acid, cetyl trimethyl ammonium bromide, polyethylene glycol, potassium polyacrylate, ethoxylated octyl phenol and fluorine sulfonate;
when the solvent is at least one of N-methyl pyrrolidone, N, N-dimethyl formamide, acetone and acetonitrile, the binder is one or more of polyvinylidene fluoride, polyvinylidene fluoride-hexafluoropropylene, polytetrafluoroethylene, polymethyl methacrylate and polyacrylonitrile, and the dispersant is one or more of glycerol monostearate, glycerol tristearate, oleamide and N, N-ethylene bis-stearamide.

9. A lithium battery, comprising the modified solid electrolyte membrane according to any one of Claims 1-6.
